# EUROPÄISCHE PATENTSCHRIFT

(11) **EP 2 312 019 B1**
(45) Veröffentlichungstag und Bekanntmachung des Hinweises auf die Patenterteilung: **27.02.2013**
(21) Anmeldenummer: 09171995.5
(22) Anmeldetag: 01.10.2009
(51) Int. Cl.: C23F 11/10, C23F 11/14, C07C 69/60, C09K 5/10, C09K 5/20, C10L 1/18, C10M 173/00, C23F 11/12

(54) **Verwendung von Korrosionsschutzadditiven zum Schutz von Aluminium und /oder Aluminiumlegierungen für Fertigungsverfahren**
Use of anticorrosion additives to protect aluminum and /or aluminum alloys in a finishing process
Utilisation des additifs anticorrosives pour la protection d'aluminium et /ou des alliages d'aluminium dans un procédé de finissage.

(43) Veröffentlichungstag der Anmeldung: 20.04.2011
(73) Patentinhaber: Rhein Chemie Rheinau GmbH, 68219 Mannheim (DE)
(72) Erfinder: Leimenstoll, Sandra, 68167 Mannheim (DE); Blaul, Anke, 64297 Darmstadt (DE); Stier, Reinhard, 68623 Lambertheim (DE); Lange, Isabell, 68766 Hockenheim (DE); Larem, David, 64859 Eppertshausen (DE)
(74) Vertreter: Siegers, Britta

(56) Entgegenhaltungen:
- EP-A- 0 249 148
- WO-A-98/10040
- WO-A-2005/071050
- DE-A1- 2 744 178
- DE-A1- 3 824 447
- GB-A- 1 533 392
- US-A- 3 045 042
- US-A- 3 117 091
- US-A- 5 080 817

## Beschreibung

Die vorliegende Erfindung betrifft die Verwendung von Korrosionsschutzadditiven zum Schutz von Aluminium- und Aluminiumlegierungen für Fertigungsverfahren, enthaltend mindestens ein Triazol und das Umsetzungsprodukt aus mindestens einem Alkylenglykol, ausgewählt aus der Gruppe Triethylenglykol, Diethylenglykol, Dipropylenglykol und Tripropylenglykol, und mindestens einem Carbonsäureanhydrid, ausgewählt aus der Gruppe Maleinsäureanhydrid, Phthalsäureanhydrid, Bernsteinsäureanhydrid und/ oder Glutarsäureanhydrid. Auf dem Markt werden unterschiedlichste Korrosionssschutzadditive für Aluminium (Korrosionsinhibitoren) angeboten. In erster Linie handelt es sich dabei um solche, die Silizium enthalten, so z.B. Tetraethylsilikat und Natriummetasilikat. Jedoch ergeben sich gerade bei den silikathaltigen Verbindungen Probleme bei den anschließenden Oberflächenbehandlungen.

Als phosphorhaltige Korrosionsschutzadditive werden heutzutage beispielsweise Polyoxyethylen-oleyletherphosphate und/oder 1-Hydroxy-1,1-diphosphonsäureethan eingesetzt. Da Phosphor starken Preisschwankungen unterliegt, ist es wünschenswert, diesen durch gleich effektive, aber günstigere Alternativen zu ersetzen.

Als Korrosionsschutzadditive für Aluminium eignen sich ebenfalls langkettige (Di-)Carbonsäuren. So ist beispielsweise aus EP-A 0439911 die korrosionsinhibierende Wirkung von Carbonsäuren in flüssigen Alkoholen bekannt. Diese Mischungen können als weitere Komponenten auch z.B. Triazole enthalten, siehe EP-A 1598407 und WO 00/11102 oder aber auch Silane, siehe EP 0739966 A1.

Nachteil dieser Mischungen ist jedoch, dass diese schlecht emulgierbar sind.

In EP 816467 B1 werden Mischungen der Alkalimetall, Ammonium- und Aminsalze hydroxylgruppenhaltiger aromatischer Monocarbonsäuren und linearer und verzweigter aliphatischer Monocarbonsäuren mit 5 bis 12 C-Atomen als Korrosionsinhibitoren in Gefrierschutzmittelkonzentraton eingesetzt. Die aliphatischen Monocarbonsäuren können dabei auch als weitere funktionelle Gruppen Ethersauerstoffatome oder Carbonylfunktionen enthalten. Diese sind in ihrer Wirkung allerdings deutlich schlechter als die vorgenannten Alternativen auch in Bezug auf die Emulgierbarkeit.

In Watanabe et al. in J. Oleo Sci, 56 (9), S. 463-469 (2007) und in J. Oleo Sci, 57 (1), S. 1-10 (2008) wird unter anderem über ein mit Maleinsäureanhydrid derivatisiertes Poly-THF mit guten Korrosionsschutzeigenschaften und Hartwasserbeständigkeit berichtet, aber auch diese Mischungen haben einen niedrigen Wirkungsgrad.

Aufgabe der vorliegenden Erfindung war es daher, phosphor- und siliziumfreie Korrosionsschutzadditive zum Schutz von Aluminum- und/oder Aluminiumlegierungen für Fertigungsverfahren bereitzustellen, die einfach und preisgünstig herzustellen sind und zumindest gleich effektiv sind, wie die zu ersetzenden Phosphor- und Siliziumhaltigen Mittel. Außerdem sollte das Korrosionsschutzadditiv lagerstabil, gut emulgierbar und wasserlöslich sein.

Diese Aufgabe wird nun durch die Verwendung bestimmter Korrosionsschutzadditive gelöst, die sich dadurch aufzeichnen, dass sie mindestens ein Triazol und das Umsetzungsprodukt aus mindestens einem Alkylenglykol, ausgewählt aus der Gruppe Triethylenglykol, Diethylenglykol, Dipropylenglykol und Tripropylenglykol, und mindestens einem Carbonsäureanhydrid, ausgewählt aus der Gruppe Maleinsäureanhydrid, Phthalsäureanhydrid, Bernsteinssäureanhydrid und/ oder Glutarsäureanhydrid,
enthalten.

Gegenstand der vorliegenden Erfindung ist daher die Verwendung von Korrosionsschutzadditiven für Fertigungsverfahren, enthaltend mindestens ein Triazol, vorzugsweise Tolyl- und/ oder Benztriazol, und das Umsetzungsprodukt aus mindestens einem Alkylenglykol, ausgewählt aus der Gruppe Triethylenglykol, Diethylenglykol, Dipropylenglykol und Tripropylenglykol, und mindestens einem Carbonsäureanhydrid, ausgewählt aus der Gruppe Maleinsäureanhydrid, Phthalsäureanhydrid, Bernsteinsäureanhydrid und/ oder Glutarsäureanhydrid, zum Schutz von Aluminium- und/oder Aluminiumlegierungen für Fertigungsverfahren.

Dabei handelt es sich um handelsübliche Produkte.

In einer besonders bevorzugten Ausführungsform der Erfindung enthalten die Korrosionsschutzadditive das Umsetzungsprodukt aus Triethylenglykol und Maleinsäureanhydrid.

Dabei handelt es sich um handelsübliche Produkte.

Vorzugsweise beträgt das Mengenverhältnis von Alkylenglykol zu Carbonsäureanhydrid 0,7: 2 bis 1,3 : 2.

Vorzugsweise beträgt das Mengenverhältnis von Triazol zu dem Umsetzungsprodukt aus Alkylenglykol und Carbonsäureanhydrid 1 : 10 bis 1 : 2.

Bei dem Umsetzungsprodukt im Sinne der Erfindung handelt es sich um das Reaktionsprodukt aus mindestens einem Alkylenglykol, ausgewählt aus der Gruppe Triethylenglykol, Diethylenglykol, Dipropylenglykol und Tripropylenglykol, und mindestens einem Carbonsäureanhydrid ausgewählt aus der Gruppe Maleinsäureanhydrid, Phthalsäureanhydrid, Bernsteinsäureanhydrid und/ oder Glutarsäureanhydrid, das nach den, dem Fachmann geläufigen Verfahren hergestellt werden können. Möglich ist so z.B. die Herstellung gemäß US-A 2698856. Dort wird die Herstellung des Dimaleinsäure-Triethylenglykol-Derivates über eine Eintopfsynthese beschrieben.

Wesentlich mehr bevorzugt, wenn es um die großtechnische Synthese geht, ist die Umsetzung von Alkylenglykol, ausgewählt aus der Gruppe Triethylenglykol, Diethylenglykol, Dipropylenglykol und Tripropylenglykol, und mindestens einem Carbonsäureanhydrid ausgewählt aus der Gruppe Maleinsäureanhydrid, Phthalsäureanhydrid, Bernsteinsäureanhydrid und/ oder Glutarsäureanhydrid, bei Temperaturen von mindestens 60°C. In einer bevorzugten Ausführungsform der Erfindung wird das Carbonsäureanhydrid vorgelegt, aufgeschmolzen und dann Alkylenglykol hinzudosiert und das Reaktionsprodukt zur Vervollständigung der Reaktion noch eine Weile bei 80°C gehalten. Ebenfalls möglich ist aber auch die umgekehrte Zugabereihenfolge oder aber auch die gleichzeitige Zudosierung.

Der Begriff Fertigungsverfahren im Sinne der Erfindung umfasst alle Verfahren nach DIN 8580, wie z.B. Umformen, Trennen, Fügen und Beschichten. Zudem sind mit umfasst neben den Verfahren der industriellen Fertigung auch andere Anwendungsbereiche, wie beispielsweise in der Instandsetzung oder im Haushalt. Des Weiteren eingeschlossen ist der Einsatz in Schmierstoffen mit Wasseranteil gemäß ISO 6743.

Bei der Herstellung der Korrosionsschutzadditive wird zunächst das Umsetzungsprodukt aus Alkylenglykol und mindestens einem Carbonsäureanhydrid hergestellt, wobei entweder
a) das Carbonsäureanhydrid aufgeschmolzen und anschließend Alkylenglykol bei Temperaturen von mindestens 60°C zugesetzt wird, oder
b) Carbonsäureanhydrid und Alkylenglykol bei Temperaturen von mindestens 60°C umgesetzt werden
und anschließend Triazol und gegebenenfalls weitere Additive dem Umsetzungsprodukt zugesetzt werden.

Die erfindungsgemäß verwendeten Korrosionsschutzadditive können auch weitere Komponenten enthalten, wie z.B. andere phosphor- und siliziumfreie Korrosionsschutzmittel, wie z.B. Sulfonsäureester, wie z.B. Addition ® RC 4810. Als Komponenten können zudem eingesetzt werden:
Group I bis V Öle gemäß der Defininition des American Petroleum Institute (API), Fettsäuren, wie z.B. Tallölfettsäure, Fettsäureester, Alkylbenzolsulfonsäuren, Alkanolamine, wie Ethanolamin, Alkylamine, wie z.B. Triethylamin, Fettsäureamide, Triglyceride, geschwefelte Fettsäureester und/oder geschwefelte Olefine, Dimercaptothiadiazol-Derivate, Carbamate, Polyglykolether, Alkohol-Ethoxylate, Ethercarbonsäuren, Glykole/ Glykolether, wie z.B. Butyldiglykol, Biozide, Entschäumer, Emulgatoren, Tenside, Fettalkohole.

Aluminiumlegierungen umfassen Guss- und Knetlegierungen sowie Aluminiumbronzen, wie sie z.B. in DIN EN 576, DIN 1706, DIN EN 573 und DIN 1982 beschrieben sind.

Anband der nachfolgenden Beispiele wird die Erfindung näher erläutert, ohne dass diese limitierend wirken.

### Beispiele

Sofern nicht anders vermerkt, beziehen sich alle Teile und Prozentangaben auf das Gewicht.

### a) Herstellung des Umsetzungsprodoktes aus Maleinsäureanhydrid mit Triethylenglykol (MATEG-Deirivat)

In einem 4-Halskolben wurde98,1 g (0,1 mol) Maleinsäureanhydrid vorgelegt und aufgeschmolzen (Smp. = 56°C). Zu dem aufgeschmolzenen Maleinsäureanhydrid wurden 75,24 g (0,501 mol) Triethylenglykol zugetropft. Um eine annähernd vollständige Umsetzung zu erreichen, wurde zunächst 3h eine Temperatur von 60°C und anschließend für 3h eine Temperatur von 80°C eingestellt.

### b) Herstellung einer Formulierung mit a)

0,5 Gew. % des zuvor hergestellten Umsetzungsproduktes (MATEG-Derivat) wurden in die nachstehende Mischung in der nachstehenden Tabelle aufgeführten Reihenfolge einformuliert. Die Mengenangaben sind in Gew%.

| Bestandteile | A (erfindungsgemäß) | B (Vergleich) | C (Vergleich) | D (Vergleich) |
|---|---|---|---|---|
| Nynas T 22 | 42,4 | 42,9 | 42,4 | 42,4 |
| Edenor ECHO | 10 | 10 | 10 | 10 |
| Additin RC 4810 | 7 | 7 | 7 | 7 |
| MEA | 2 | 2 | 2 | 2 |
| TEA | 8 | 8 | 8 | 8 |
| Rewocoros AC 101 | 6 | 6 | 6 | 6 |
| TOFA | 5 | 5 | 5 | 5 |
| Additin RC 5800 | 0,1 | 0,1 | 0,1 | 0,1 |
| Addition RC 2415 | 6 | 6 | 6 | 6 |
| Additin RC 2317 | 3 | 3 | 3 | 3 |
| MATEG-Derivat | 0,5 | 0 | 0 | 0 |
| TEOS | 0 | 0 | 0,5 | 0 |
| Cublen K 60 | 0 | 0 | 0 | 0,5 |
| Emulsogen M | 2,9 | 2,9 | 2,9 | 2,9 |
| Lutensol XL 80 | 1,1 | 1,1 | 1,1 | 1,1 |
| Emulsogen COL 100 | 2 | 2 | 2 | 2 |
| BDG (Butyldiglykol) | 1 | 1 | 1 | 1 |
| H₂O | 3 | 3 | 3 | 3 |

Dabei haben die Abkürzungen die folgende Bedeutung:
Nynas T 22 = Mineralöl, erhältlich bei der Firma Nynas Naphtenics AB
Edenor EHO = Ethylhexyloleat, erhältlich bei der Firma Cognis GmbH
Additin ® RC 4810 = Sulfonsäureester, erhältlich bei der Firma Rhein Chemie Rheinau GmbH
MEA = Monoethanolamin, erhältlich bei der Firma BASF AG
TEA = Triethanolamin, erhältlich bei der Firma BASF AG
Rewocoros AC 101 = Lösung eines modifizierten Fensäurealkylolamides, erhältlich bei der Firma Goldschmidt
TOFA = Tallöldestillat, erhältlich von der Firma Gustav Heess GmbH
Additin® RC 5800 = 50% ige Na-Lösung von Tolyltriazol, erhältlich bei der Firma Rhein Chemie Rheinau GmbH
Additin® RC 2415 = geschwefelter Fettsäureester, erhältlich bei der Firma Rhein Chemie Rheinau GmbH
Additin® RC 2317 = geschwefelter Fettsäureester, erhältlich bei der Firma Rhein Chemie Rheinau GmbH
Emulsogen M = Polyglykolether mit 5 mol (Ethylenoxid) EO basierend auf Oleyl /Cethylalkohol, erhältlich bei der Firma Clariant
Lutensol XL 80 = C₁₀-Guerbetalkohol-Ethoxylat mit 8 Mol EO, erhältlich bei der BASF AG
Emulsogen COL 100 = Ethercarbonsäure mit 10 mol Ethylenoxid (EO), erhältlich bei der Firma Clariant
BDG = Butyldiglykol, erhältlich bei der Firma BASF AG
Cublen K 60 = 1-Hydroxy-1,1-diphosphonsäurr-ethan, erhältlich bei der Firma Zschimmer & Schwarz
TEOS = Tetraethylsilikat

### c) Korrosionsschutzprüfungen mit Aluminiumblechen in Emulsionen

5% der unter b) hergestellten Formulierung werden unter Rühren in Wasser emulgiert.

Zur Beurteilung der Korrosionsschutzwirkung werden die nachstehenden Aluminiumbleche 1 bis 3
1. Legierung 6016
2. Legierung 7075 und
3. Legierung 5754
in eine aus den Formulierungen A bis D hergestellte Emulsion gestellt und nach 3-tägiger Lagerung in dieser Emulsion bei Raumtemperatur hinsichtlich ihrer Korrosion visuell beurteilt.

Die Ergebnisse sind in der nachstehenden Tabelle zusammengefasst.

| Alublech Nr./ Emulsion aus | 5%ige Emulsion aus Formulierung A (erfindungsgemäß) | 5%ige Emulsion aus Formulierung B (Vergleich) | 5%ige Emulsion aus Formulierung C (Vergleich) | 5%ige Emulsion aus Formulierung D (Vergleich) |
|---|---|---|---|---|
| 1 | Keine Verfärbung | schwarz verfärbt | Keine Verfärbung | Leichte Verfärbung |
| 2 | Keine Verfärbung | schwarz verfärbt | Keine Verfärbung | Leichte Verfärbung |
| 3 | Keine Verfärbung | deutlich Verfärbung | Keine Verfärbung | Leichte Verfärbung |
| pH-Wert der Emulsion | 9,3 | 9,3 | 9,3 | 9,3 |

Die Beispiele A belegen, dass die aus den erfindungsgemäßen Korrosionsschutzadditiven hergestellten Emulsionen eine deutliche Korrosionsschutzwirkung aufweisen.

Die erfindungsgemäßen Mischungen sind vergleichbar gut zu dem im Stand der Technik eingesetzten silicium- bzw. phosphorhaltigen Emulsionen, und haben des Weiteren den Vorteil, dass bei nachgeschalteten Bearbeitungsprozessen, wie Galvanisieren und Lackieren, keine negativen Nachwirkungen auftreten und die erfindungsgemäßen Korrosionsschutzadditive für die Fertigungsverfahren gut verfügbar sind.

## Patentansprüche

1. Verwendung von Korrosionsschutzadditiven enthaltend mindestens ein Triazol und das Umsetzungsprodukt aus mindestens einem Alkylenglykol, ausgewählt aus der Gruppe Triethylenglykol, Diethylenglykol, Dipropylenglykol und Tripropylenglykol, und mindestens einem Carbonsäureanhydrid, ausgewählt aus der Gruppe Maleinsäureanhydrid, Phthalsäure anhydrid, Bernsteinsäureanhydrid und/ oder Glutarsäurcanhydrid, zum Schutz für Aluminium- und /oder Aluminiumlegierungen.

2. Verwendung nach Anspruch 1, **dadurch gekennzeichnet, dass** es sich bei dem Alkylenglykol um Triethylenglykol und bei dem Carbonsäureanhydrid um Maleinsäureanhydrid handelt.

3. Verwendung nach Anspruch 1 oder 2, **dadurch gekennzeichnet, dass** es sich bei dem Triazol um Tolyl- und/oder Benztriazol handelt.

4. Verwendung nach einem oder mehreren der Ansprüche 1 bis 3, **dadurch gekennzeichnet, dass** das Mengenverhältnis von Alkylenglykol zu Carbonsäureanhydrid 0,7: 2 bis 1,3 : 2 und das Mengenverhältnis von Triazol zu dem Umsetzungsprodukt aus Alkylenglykol und Carbonsäureanhydrid 1 : 10 bis 1 : 2 beträgt.

## Claims

1. Use of anticorrosion additives comprising at least one triazole and the reaction product of at least one alkylene glycol selected from the group consisting of triethylene glycol, diethylene glycol, dipropylene glycol and tripropylene glycol, and at least one carboxylic anhydride selected from the group consisting of maleic anhydride, phthalic anhydride, succinic anhydride and/or glutaric anhydride, for protection for aluminium and/or aluminium alloys.

2. Use according to Claim 1, **characterized in that** the alkylene glycol is triethylene glycol, and the carboxylic anhydride is maleic anhydride.

3. Use according to Claim 1 or 2, **characterized in that** the triazole is tolyl- and/or benztriazole.

4. Use according to one or more of Claims 1 to 3, **characterized in that** the ratio of alkylene glycol to carboxylic anhydride is 0.7:2 to 1.3:2, and the ratio of triazole to the reaction product of alkylene glycol and carboxylic anhydride is 1:10 to 1:2.

## Revendications

1. Utilisation d'additifs anticorrosion contenant au moins un triazole et le produit de réaction d'au moins un alkylène glycol, choisi dans le groupe constitué par le triéthylène glycol, le diéthylène glycol, le dipropylène glycol et le tripropylène glycol, et d'au moins un anhydride d'acide carboxylique, choisi dans le groupe constitué par l'anhydride de l'acide maléique, l'anhydride de l'acide phtalique, l'anhydride de l'acide succinique et/ou l'anhydride de l'acide glutarique, pour la protection d'aluminium et/ou d'alliages d'aluminium.

2. Utilisation selon la revendication 1, **caractérisée en ce que** l'alkylène glycol consiste en du triéthylène glycol et l'anhydride de l'acide carboxylique consiste en de l'anhydride de l'acide maléique.

3. Utilisation selon la revendication 1 ou 2, **caractérisée en ce que** le triazole consiste en du tolyl- et/ou benzotriazole.

4. Utilisation selon une ou plusieurs des revendications 1 à 3, **caractérisée en ce que** la proportion de l'alkylène glycol par rapport à l'anhydride de l'acide carboxylique est de 0,7:2 à 1,3:2 et la proportion du triazole par rapport au produit de réaction d'un alkylène glycol et d'un anhydride d'acide carboxylique est de 1:10 à 1:2.
